(19) Europäisches Patentamt
European Patent Office
Office européen des brevets

(11) **EP 3 608 205 B1**

(12) **EUROPÄISCHE PATENTSCHRIFT**

(45) Veröffentlichungstag und Bekanntmachung des Hinweises auf die Patenterteilung:
**08.11.2023  Patentblatt 2023/45**

(21) Anmeldenummer: **19184096.6**

(22) Anmeldetag: **03.07.2019**

(51) Internationale Patentklassifikation (IPC):
**B62D 13/00** *(2006.01)*     **B62D 15/02** *(2006.01)*
**B60D 1/00** *(2006.01)*

(52) Gemeinsame Patentklassifikation (CPC):
**B62D 13/00; B60D 1/62; B62D 15/023; B62D 15/024**

(54) **VERFAHREN ZUR KNICKWINKELBESTIMMUNG BEI EINEM FAHRZEUGGESPANN**

METHOD FOR DETERMINATION OF BENDING ANGLE IN A VEHICLE TRAIN

PROCÉDÉ DE DÉTERMINATION DE L'ANGLE DE FLÈCHE D'UN ATTELAGE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2018  DE 102018117353**

(43) Veröffentlichungstag der Anmeldung:
**12.02.2020  Patentblatt 2020/07**

(73) Patentinhaber: **MAN Truck & Bus SE 80995 München (DE)**

(72) Erfinder: **Gutzeit, Reinhard 82049 Pullach (DE)**

(74) Vertreter: **v. Bezold & Partner Patentanwälte - PartG mbB
Ridlerstraße 57
80339 München (DE)**

(56) Entgegenhaltungen:
EP-A1- 2 436 540          DE-A1- 10 154 612
DE-A1-102004 025 252      DE-A1-102008 013 457
DE-A1-102015 203 969      DE-A1-102016 105 259
DE-A1-102016 209 418      DE-C1- 10 030 738
US-A1- 2014 085 472       US-A1- 2016 039 456
US-B2- 9 085 261

EP 3 608 205 B1

**Beschreibung**

Die Erfindung betrifft ein Verfahren zur Knickwinkelbestimmung bei einem Fahrzeuggespann, vorzugsweise einem Gelenkbus oder aufweisend ein Zugfahrzeug und einen Anhänger und/oder einen Auflieger.

Die DE 100 30 738 C1 offenbart eine Anordnung zur Bestimmung des Knickwinkels zwischen einem Zugfahrzeug und einem Anhänger oder Auflieger. Die Anordnung enthält zwei Ultraschall-Transceiver, die auf zwei unterschiedlichen Signalstrecken Ultraschallimpulse aussenden und empfangen. Die Ultraschalltransceiver sind hierbei am Zugfahrzeug angebracht und senden die Ultraschallimpulse in Richtung Anhänger oder Auflieger. Am Anhänger oder Auflieger sind passive Reflektoren angebracht, deren Oberfläche zumindest einen Anteil der Signalenergie der einfallenden Ultraschallimpulse um 180° wendet und entgegen der Einstrahlrichtung wieder zu den Transceivern zurückreflektiert. Die Ultraschalltransceiver sind über eine Schnittstelle mit einem Bordrechner verbunden, in dem aus den Laufzeiten der jeweiligen Ultraschallimpulse aus den beiden Messrichtungen die Länge der Signalstrecken und aus den Signalstrecken und den geometrischen Abmessungen der Anordnung der Knickwinkel zwischen Zugfahrzeug und Anhänger oder Auflieger bestimmt wird.

Die DE 101 54 612 A1 betrifft eine Vorrichtung zum Lenken eines Zugfahrzeuges mit einem Anhänger bei Rückwärtsfahrt, mit einer elektronischen Steuereinheit, die zumindest Korrekturen für den Lenkeinschlag der lenkbaren Räder des Zugfahrzeuges in Abhängigkeit vom Winkel zwischen der Längsachse des Zugfahrzeuges und der Längsachse des Anhängers oder der Anhänger-Deichsel vorgibt. Der besagte Winkel wird aus den Signalen zumindest zweier Abstandssensoren, die am Zugfahrzeug und/oder am Anhänger vorgesehen sind und die den jeweiligen Abstand zwischen dem Zugfahrzeug und dem Anhänger oder der Deichsel desselben ermitteln, bestimmt. Die Korrektur für den Lenkeinschlag kann dem Fahrzeugführer angezeigt oder direkt in ein geeignetes Lenksystem des Zugfahrzeuges, welches unabhängig von oder zusätzlich zu den Vorgaben des Fahrzeugführers den Lenkeinschlag der lenkbaren Räder beeinflusst, eingespeist werden. Bevorzugt arbeiten die Abstandssensoren auf Ultraschallbasis oder Radarbasis und werden im Zugbetrieb bei Vorwärtsfahrt des Zugfahrzeuges kalibriert.

Die EP 2 436 540 A1 betrifft eine Anordnung zum Bestimmen der Winkelposition eines zu schleppenden Fahrzeugs relativ zu einem Zugfahrzeug.

Der Erfindung liegt die Aufgabe zu Grunde, ein alternatives und/oder verbessertes Verfahren zur Knickwinkelbestimmung zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Das Verfahren dient zur Knickwinkelbestimmung bei einem Fahrzeuggespann, vorzugsweise ein Gelenkbus oder aufweisend ein Zugfahrzeug und einen Anhänger und/oder einen Auflieger. Das Verfahren weist das Bestimmen einer Position eines, vorzugsweise anhänger- oder aufliegerseitigen, Reflektors relativ zu einer, vorzugsweise zugfahrzeugseitigen, Abstandssensorvorrichtung (z. B. Ultraschalltransceivervorrichtung) bei einer (z. B. definierten) Geradeausfahrt des Fahrzeuggespanns auf (z. B. mittels der Abstandssensorvorrichtung). Das Verfahren weist das Bestimmen eines Ist-Knickwinkels des Fahrzeuggespanns mittels der Abstandssensorvorrichtung und des Reflektors während eines Betriebs des Fahrzeuggespanns nach der Geradeausfahrt basierend auf der ermittelten Position des Reflektors auf.

Das Verfahren ermöglicht eine flexible Positionierung des Reflektors. Bspw. muss der Reflektor nur grob innerhalb eines Sollbereichs des Aufliegers oder Anhängers angeordnet sein. Dadurch können beliebige Anhänger oder Auflieger mit unterschiedlichsten Radständen, bei denen der Reflektor jeweils teilweise etwas anders positioniert sein kann, mit dem Zugfahrzeug gekoppelt werden. Dies trägt dem in der Praxis häufig vorkommenden Wechsel von Zugfahrzeugen und Anhängern oder Aufliegern Rechnung. Das Verfahren ermöglicht aufgrund einer initialen Kalibrierung (Bestimmen der Relativposition des Reflektors relativ zur Abstandssensorvorrichtung bei der Geradeausfahrt) dennoch eine hochgenaue Knickwinkelbestimmung. Hierbei ist auch lediglich ein simpler Reflektor notwendig und nicht etwa irgendeine kabelgebundene oder kabellose Kommunikation zwischen dem Zugfahrzeug und dem Auflieger oder dem Anhänger erforderlich.

Vorzugsweise kann der Reflektor ein passiver Reflektor sein.

Vorzugsweise kann die Abstandssensorvorrichtung hin zu dem Anhänger oder Auflieger gerichtet sein.

Beispielsweise kann die Abstandssensorvorrichtung einen Signalimpuls (z. B. Ultraschallimpuls) in Richtung zu dem Reflektor und/oder Anhänger oder Auflieger senden, der von dem Reflektor zumindest teilweise wieder zurück zu der Abstandssensorvorrichtung reflektiert wird.

In einem Ausführungsbeispiel erfolgt die Bestimmung der Position des Reflektors innerhalb eines vorbestimmen Anbringungsbereichs (Soll-Bereichs), sodass der Reflektor innerhalb dieses vorbestimmen Anbringungsbereichs frei positionierbar ist. Bei unterschiedlichen Anhängern und Aufliegern mit unterschiedlichen Radständen usw. kann der Reflektor somit jeweils unterschiedlich positioniert sein, solange er im vorbestimmen Anbringungsbereich positioniert ist.

In einem weiteren Ausführungsbeispiel wird die Bestimmung der Position des Reflektors bei einer Neuankopplung oder einer Abkoppelung des Anhängers oder des Aufliegers an das Zugfahrzeug wiederholt.

In einer Weiterbildung wird die Neuankopplung oder die Abkoppelung erkannt durch Manuelles Eingeben in eine Benutzerschnittstelle des Fahrzeuggespanns, vorzugsweise des Zugfahrzeugs. Alternativ oder zusätzlich wird eine Veränderung eines Abstands zwischen dem Zugfahrzeug und dem Anhänger oder dem Auflieger, vorzugsweise bei eingeschalteter Zündung des Zugfahrzeugs, erkannt. Alternativ oder zusätzlich wird ein Lenkwinkels des Zugfahrzeugs vor einem Ausschalten einer Zündung des Zugfahrzeugs mit einem Lenkwinkel des Zugfahrzeugs nach einem Einschalten der Zündung verglichen und/oder ein erfasster Abstand zwischen dem Zugfahrzeug und dem Anhänger oder dem Auflieger vor dem Ausschalten der Zündung wird mit einem erfassten Abstand zwischen dem Zugfahrzeug und dem Anhänger oder dem Auflieger nach dem Einschalten der Zündung verglichen.

In einem weiteren Ausführungsbeispiel wird die, vorzugsweise definierte, Geradeausfahrt des Fahrzeuggespanns (vorzugsweise zum Kalibrieren/Anlernen einer Geradeausfahr-Position des Reflektors innerhalb des vorbestimmten Anbringungsbereichs für den Reflektor) durchgeführt für eine vorbestimmte Zeitdauer (z. B. 5 s) und/oder oberhalb einer vorbestimmten Mindestgeschwindigkeit (z. B mindestens 15 km/h) und/oder unterhalb eines vorbestimmen Maximalbeschleunigungsbetrags (z. B. maximal 0,05 m/s$^2$) und/oder unterhalb eines vorbestimmen Maximallenkwinkelbetrags (z. B. maximal 2°).

In einem weiteren Ausführungsbeispiel ist der Reflektor als ein Reflektorpin, vorzugsweise als ein Stahlpin, ausgebildet.

In einem weiteren Ausführungsbeispiel weist die Abstandssensorvorrichtung einen ersten Abstandssensor, vorzugsweise Ultraschalltransceiver, und einen zweiten Abstandssensor, vorzugsweise Ultraschalltransceiver, auf, die beabstandet zueinander in einer Querrichtung des Fahrzeuggespanns angeordnet sind.

In einem weiteren Ausführungsbeispiel ist die Abstandssensorvorrichtung an einer Sattelplatte des Zugfahrzeugs angeordnet, vorzugsweise an einer dem Auflieger zugewandten Fläche der Sattelplatte. Alternativ ist die Abstandssensorvorrichtung an einem Heckquerträger des Zugfahrzeugs angeordnet, vorzugsweise an einer dem Anhänger zugewandten Fläche des Heckquerträgers.

Es ist möglich, dass der Reflektor außerhalb eines Drehkreises einer Sattelplatte des Zugfahrzeugs vorzugsweise unterhalb des Aufliegers angeordnet. Alternativ ist der Reflektor an einer Deichsel des Anhängers, vorzugsweise einem dem Zugfahrzeug zugewandten Dreieck der Deichsel, angeordnet.

In einem weiteren Ausführungsbeispiel weist das Verfahren ferner das Bestimmen einer Ist-Radstandskonfiguration einer veränderlichen Radstandskonfiguration des Fahrzeuggespanns, vorzugsweise des Zugfahrzeugs, des Anhängers und/oder des Aufliegers, auf. Das Verfahren weist ferner das Bestimmen eines Soll-Knickwinkels und/oder eines Soll-Knickwinkelbereichs basierend auf der Ist-Radstandskonfiguration auf. Das Verfahren weist ferner das Vergleichen des Ist-Knickwinkels mit dem Soll-Knickwinkel und/oder dem Soll-Knickwinkelbereich auf. Die Berücksichtigung der Ist-Radstandskonfiguration ermöglicht eine weitere Verfeinerung der Bestimmung des Soll-Knickwinkels bzw. des Sollknickwinkelbereich, da erkannt wurde, dass auch unterschiedliche Radstandskonfigurationen bspw. bei Liftachsen und steuerbaren Lenkachsen einen Einfluss auf den Knickwinkel eines Fahrzeuggespanns haben können. Gemäß dem hierin vorgeschlagenen Verfahren wird die Ist-Radstandskonfiguration demnach bei der Soll-Knickwinkel(-bereichs-)bestimmung berücksichtigt. So kann beispielsweise ein Fahrstabilitätssystem, zum Beispiel ESP, mit dem hierin offenbarten Verfahren verbessert werden.

Bspw. kann die Ist-Radstandskonfiguration explizit in Form eines geometrischen Werts bestimmt und berücksichtigt und/oder implizit dadurch berücksichtigt werden, dass für verschiedene Ist-Radstandskonfigurationen (z. B. vorbestimmte Ist-Radstandskonfiguration 1 = Liftachse angehoben; vorbestimmte Ist-Radstandskonfiguration 2 = Liftachse abgesenkt) verschiedene Soll-Knickwinkel und/oder Soll-Knickwinkelbereiche vorbestimmt sind.

In einem Ausführungsbeispiel basiert der Soll-Knickwinkel und/oder der Soll-Knickwinkelbereich zusätzlich auf einem Ist-Lenkwinkel des Zugfahrzeugs, und vorzugsweise zusätzlich auf einer Ist-Geschwindigkeit des Fahrzeuggespanns, klimatischen Ist-Bedingungen und/oder Ist-Traktionsbedingungen.

In einem weiteren Ausführungsbeispiel ist die veränderliche Radstandskonfiguration durch eine Liftachse des Fahrzeuggespanns, vorzugsweise des Zugfahrzeugs, des Anhängers und/oder des Aufliegers, veränderlich. Alternativ oder zusätzlich ist die veränderliche Radstandskonfiguration durch eine steuerbare Lenkachse des Fahrzeuggespanns, vorzugsweise des Zugfahrzeugs, des Anhängers und/oder des Aufliegers veränderlich.

In einem weiteren Ausführungsbeispiel weist die Ist-Radstandskonfiguration auf: einen wirksamen (vorzugsweise horizontalen) Abstand zwischen einem Führungszapfen (King-Pin) des Aufliegers und einer oder mehrerer Achsen des Aufliegers im Eingriff mit einem Untergrund; und/oder einen wirksamen (vorzugsweise horizontalen) Abstand zwischen einer oder mehrerer Vorderachsen des Zugfahrzeugs im Eingriff mit einem Untergrund und einer oder mehreren Hinterachsen des Zugfahrzeugs im Eingriff mit dem Untergrund; und/oder einen wirksamen (vorzugsweise horizontalen) Abstand zwischen einem Anhängerkupplungsdrehpunkt des Anhängers und einer oder mehrerer Achsen des Anhängers im Eingriff mit einem Untergrund.

Es ist auch möglich, dass die Radstandskonfiguration eine Information bezüglich einer Stellung einer anhebbaren und absenkbaren Liftachse des Fahrzeuggespanns, vorzugsweise des Zugfahrzeugs, des Anhängers und/oder des Aufliegers, und/oder eine Information bezüglich einer Stellung einer steuerbaren Lenkachse des Fahrzeuggespanns, vorzugsweise des Zugfahrzeugs, des Anhängers und/oder des Aufliegers, aufweist.

In einer Weiterbildung ist bei gleichem Ist-Lenkwinkel des Zugfahrzeugs der Soll-Knickwinkel und/oder der Soll-Knickwinkelbereich umso höher, je größer der wirksame Abstand ist.

In einer Ausführungsform weist das Bestimmen der Ist-Radstandskonfiguration das manuelle Eingeben und/oder Auswählen der Ist-Radstandskonfiguration der veränderlichen Radstandskonfiguration des Fahrzeuggespanns, vorzugsweise des Zugfahrzeugs, des Anhängers und/oder des Aufliegers, auf (zum Beispiel mittels einer Benutzerschnittstelle beispielsweise im Zugfahrzeug). Alternativ oder zusätzlich weist das Bestimmen der Ist-Radstandskonfiguration das automatische Bestimmen (zum Beispiel Erfassen oder Ermitteln) der Ist-Radstandskonfiguration der veränderlichen Radstandskonfiguration des Fahrzeuggespanns, vorzugsweise des Zugfahrzeugs, des Anhängers und/oder des Aufliegers, auf.

Zum Beispiel kann die Ist-Radstandskonfiguration des Zugfahrzeugs von einer Steuereinheit des Zugfahrzeugs abrufbar sein und/oder in dieser gespeichert sein.

Beispielsweise kann die Ist-Radstandskonfiguration des Anhängers und/oder Aufliegers als Steuerdaten vorliegen und/oder als Parameter eingegeben, ausgewählt und/oder aus Fahr- und/oder Lenkbewegungen des Fahrzeuggespanns ermittelt werden.

In einer Ausführungsvariante wird der Soll-Knickwinkel und/oder der Soll-Knickwinkelbereich für eine oder eine Mehrzahl von Ist-Radstandskonfigurationen durch eine vorzugsweise definierte Kurvenfahrt des Fahrzeuggespanns vorzugsweise unter stabilen Fahrbedingungen vorbestimmt, vorzugsweise oberhalb einer vorbestimmten Mindestgeschwindigkeit (z. B mindestens 15 km/h) und/oder unterhalb eines vorbestimmen Maximalbeschleunigungsbetrags (z. B. maximal 0,05 m/s$^2$) und/oder innerhalb eines vorbestimmen Lenkwinkelbereichs (z. B. 10° ± 2°, 20° ± 2°, 30° ± 2°, 40° ± 2°, 50° ± 2°, 60° ± 2° oder 70° ± 2° usw.).

Es ist möglich, dass das Verfahren ferner das Durchführen eines automatischen Stabilisierungseingriffs zum Stabilisieren des Fahrzeuggespanns, vorzugsweise eines Lenkeingriffs und/oder einer Geschwindigkeitsverringerung (z. B radselektives Bremsen), basierend auf dem Vergleichen (z. B. Ist-Knickwinkel ungleich Soll-Knickwinkel und/oder außerhalb von Soll-Knickwinkelbereich) aufweist. Alternativ oder zusätzlich weist das Verfahren ferner das Informieren eines Fahrzeugführers des Zugfahrzeugs basierend auf dem Vergleichen auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    ein schematische Abbildung eines Zugfahrzeugs, mit Liftachse im abgesenkten Zustand links und im angehoben Zustand rechts;

Figur 2    eine schematische Abbildung eines Aufliegers, mit Liftachse im abgesenkten Zustand links und im angehoben Zustand rechts;

Figur 3    eine schematische Abbildung eines Anhängers, mit Liftachse im abgesenkten Zustand links und im angehoben Zustand rechts;

Figur 4    eine schematische Abbildung eines Fahrzeuggespanns mit veränderlicher Radstandskonfiguration in zwei unterschiedlichen Wendekreisen, jeweils in zwei Varianten, die sich in einer Ist-Radstandskonfiguration unterscheiden;

Figur 5    eine schematische Abbildung eines beispielhaften Soll-Knickwinkelbereichs in Abhängigkeit vom Lenkradwinkel;

Figur 6    ein Ablaufdiagramm eines beispielhaften Verfahrens gemäß der vorliegenden Offenbarung; und

Figur 7    eine schematische Abbildung eines Koppelbereichs zwischen Zugfahrzeug und Anhänger bzw. Auflieger mit eingezeichneten relevanten geometrischen Größen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die vorliegende Offenbarung beruht zumindest teilweise auf der Erkenntnis, dass unterschiedliche Anhänger und Auflieger mit unterschiedlichen Radständen bei unterschiedlichen Lenkwinkeln eines Zugfahrzeugs zu unterschiedlichen Knickwinkeln führen. Es wird daher ein Verfahren zur Knickwinkelbestimmung vorgeschlagen, das auch bei unterschiedlichen Anhängern und Aufliegern mit unterschiedlichen Radständen zur genauen Knickwinkelbestimmung geeignet ist. Zum anderen ermöglicht das Verfahren auch, das ein Reflektor zur Knickwinkelbestimmung variabel positioniert sein kann.

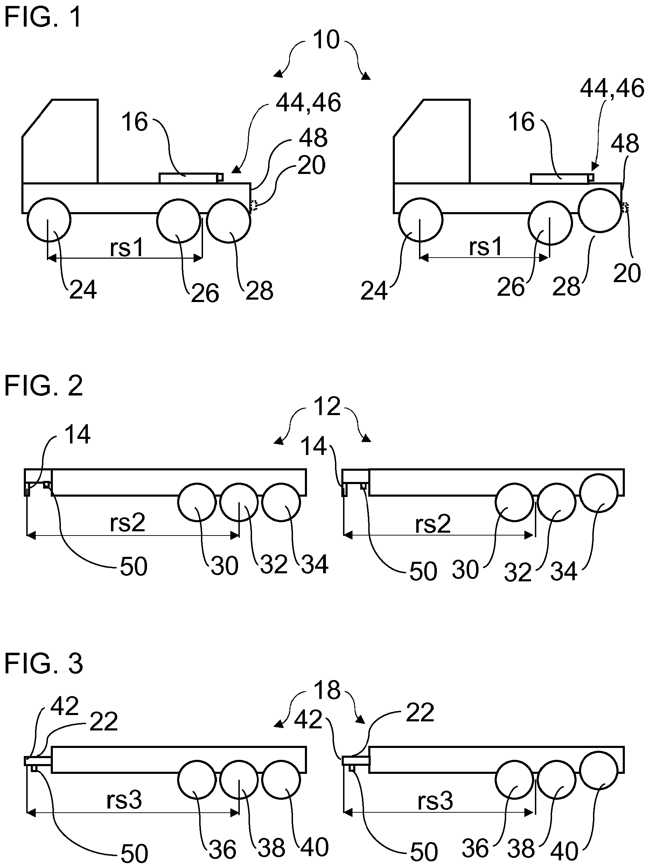

Die vorliegende Offenbarung beruht außerdem zumindest teilweise auf der Erkenntnis, dass für eine möglichste genaue Soll-Knickwinkelvorgabe für ein Fahrzeuggespann eine wirksame Ist-Radstandskonfiguration einer veränderlichen Radstandskonfiguration eines Fahrzeuggespanns, vorzugsweise eines Zugfahrzeugs, eines Aufliegers und/oder eines Anhängers, berücksichtigt werden kann. Die dieser Erkenntnis zugrundeliegenden Überlegungen sind nachfolgend unter Bezugnahme auf die Figuren 1 bis 4 beschrieben.

Die Figur 1 zeigt ein Zugfahrzeug 10. Das Zugfahrzeug 10 ist beispielhaft als ein Lastkraftwagen, hier insbesondere als eine Sattelzugmaschine, ausgebildet. Das Zugfahrzeug 10 kann zusammen mit einem (Sattel-) Auflieger 12 (dargestellt in Figur 2) ein Fahrzeuggespann bilden. Der Auflieger 12 kann mittels eines Führungszapfens 14 des Aufliegers 12 mit einer Sattelplatte 16 des Zugfahrzeugs 10 gelenkig verbunden werden.

Es ist allerdings auch möglich, dass das Zugfahrzeug 10 eine Anhängerkupplung 20 (gepunktet in Figur 1 dargestellt) aufweist, mit der eine Deichsel 22 eines Anhänger 18 (dargestellt in Figur 3) gelenkig verbunden werden kann, um ein Fahrzeuggespann zu bilden.

Das Zugfahrzeug von Figur 1, der Sattelauflieger von Figur 2 und der Anhänger von Figur 3 weisen jeweils eine veränderliche bzw. variable Radstandskonfiguration durch das Vorhandensein einer Liftachse (an- und absenkbare Achse) auf. Eine veränderliche Radstandskonfiguration kann auch auf andere Art und Weise möglich sein, zum Beispiel durch das Vorsehen einer steuerbaren Lenkachse (nicht dargestellt).

Unter Bezugnahme auf Figur 1 weist das Zugfahrzeug 10 eine Vorderachse 24 und zwei Hinterachsen 26, 28 auf. Die zweite Hinterachse 28 ist als eine Liftachse ausgebildet. Die zweite Hinterachse 28 kann somit wahlweise angehoben oder abgesenkt werden. Damit kann beispielsweise kraftstoffeffizient auf unterschiedliche Belastungssituationen reagiert werden. Im angehobenen Zustand ist die zweite Hinterachse 28 außer Eingriff mit einem Untergrund bzw. Boden, das heißt sie berührt den Boden nicht. Im abgesenkten Zustand ist die zweite Hinterachse 28 im Eingriff mit dem Untergrund, das heißt sie berührt den Boden. Je nachdem, ob die zweite Hinterachse 28 abgesenkt (linke Darstellung in Figur 1) oder angehoben (rechte Darstellung in Figur 1) ist, ergibt sich ein unterschiedliche wirksame Radstandskonfiguration, insbesondere ein unterschiedlicher wirksamer Abstand zwischen der Vorderachse 24 und den Hinterachsen 26, 28. So erstreckt sich der wirksame Abstand rs1 bei abgesenkter zweiter Hinterachse 26 von der Vorderachse 24 bis mittig zwischen die zwei Hinterachsen 26, 28. Bei angehobener zweiter Hinterachse 28 erstreckt sich der wirksame Abstand rs1 von der Vorderachse 24 bis zur ersten Hinterachse 26.

Unter Bezugnahme auf Figur 2 weist der Auflieger 12 drei Achsen 30, 32 und 34 auf. Beispielsweise ist die dritte Achse 34 als eine Liftachse ausgebildet. Die dritte Achse 34 kann somit wahlweise angehoben oder abgesenkt werden, wobei sie den Boden im abgesenkten Zustand berührt (linke Darstellung in Figur 2) und den Boden im angehobenen Zustand nicht berührt (rechte Darstellung in Figur 2). Es ergibt sich jeweils ein unterschiedlicher wirksamer Abstand rs2 bezüglich der veränderlichen Radstandskonfiguration des Fahrzeuggespanns, insbesondere des Aufliegers 12. Der wirksame Abstand rs2 erstreckt sich bei abgesenkter dritter Achse 34 zwischen dem Führungszapfen 14 und der zweiten Achse 32. Der wirksame Abstand rs2 erstreckt sich bei angehobener dritter Achse 34 zwischen dem Führungszapfen 14 und mittig zwischen der ersten Achse 30 und der zweiten Achse 32.

Unter Bezugnahme auf Figur 3 weist der Anhänger 18 drei Achsen 36, 38 und 40 auf. Beispielsweise ist die dritte Achse 40 als eine Liftachse, die wahlweise angehoben oder abgesenkt werden kann, ausgebildet. Es ergibt sich jeweils ein unterschiedlicher wirksamer Abstand rs3 bezüglich der veränderlichen Radstandskonfiguration des Fahrzeuggespanns, insbesondere des Anhängers 18. Der wirksame Abstand rs3 erstreckt sich bei abgesenkter dritter Achse 40 zwischen einer Anhängerkupplung 42 an der Deichsel 22 und der zweiten Achse 38 (linke Darstellung in Figur 3). Der wirksame Abstand rs3 erstreckt sich bei angehobener dritter Achse 40 zwischen der Anhängerkupplung 42 und mittig zwischen der ersten Achse 36 und der zweiten Achse 38.

Es wird darauf hingewiesen, dass die Anzahl und Anordnung der Achsen in den Figuren 1 bis 3 rein beispielhaft sind. In anderen Ausführungsbeispielen können zusätzliche oder alternative oder weniger Achsen vorhanden sein, die sich aufgrund anderer Anforderungen an Achslasten, Achslastverteilungen bzw. Zuladungen ergeben.

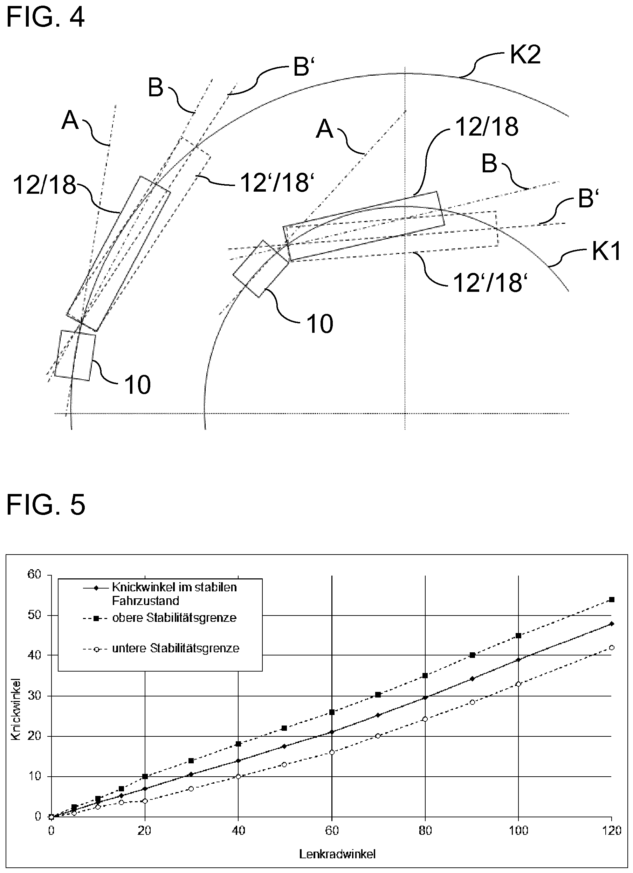

Figur 4 zeigt die Auswirkungen unterschiedlicher Radstände auf einen Knickwinkel zwischen Zugfahrzeug 10 und Auflieger 12/Anhänger 18 am Beispiel einer veränderlichen Radstandskonfiguration am Auflieger 12/Anhänger 18.

Figur 4 zeigt das Fahrzeuggespann in zwei unterschiedlichen Wendekreisen K1 und K2. Beim kleinen Wendekreis K1 ist der Ist-Lenkwinkel des Zugfahrzeugs 10 größer als beim großen Wendekreis K2. Der Auflieger/Anhänger mit kurzer Ist-Radstandskonfiguration (Auflieger 12/Anhänger 18) bzw. kurzem Radstand ist mit durchgezogenen Linien dargestellt. Der Auflieger/Anhänger mit langer Ist-Radstandskonfiguration (Auflieger 12'/Anhänger18') bzw. langem Radstand ist gestrichelt dargestellt. Der Knickwinkel ist bestimmt zwischen einer Längsachse A des Zugfahrzeugs 10 und einer Längsachse B bzw. B' des Aufliegers 12 bzw. 12'/Anhängers 18 bzw. 18'. Bei gleichem Ist-Lenkwinkel des Zugfahrzeugs 10 ist beim kleinen Wendekreis K1 der Knickwinkel bei kurzer Ist-Radstandskonfiguration (Ist-Abstand rs2/rs3 - vgl. Figuren 2 und 3) am Auflieger 12/Anhänger 18 kleiner als bei langer Ist-Radstandskonfiguration (Ist-Abstand rs2/rs3 - vgl. Figuren 2 und 3) am Auflieger 127Anhänger 18'. Der Effekt ist bei dem größeren Wendekreis K2 ebenso vorhanden, wenn auch weniger stark ausgeprägt.

Für ein Verfahren zum Stabilisieren eines Fahrzeuggespanns kann ein Ist-Knickwinkel mit einem Soll-Knickwinkel oder Soll-Knickwinkelbereich verglichen werden. Es wird vorgeschlagen, dass der Soll-Knickwinkel oder Soll-Knickwinkelbereich (auch) in Abhängigkeit von der Ist-Radstandskonfiguration einer veränderlichen Radstandskonfiguration bestimmt wird, da sich der Soll-Knickwinkel, der sich auf stabile Fahrbedingungen bezieht, abhängig von der Ist-Radstandskonfiguration der variablen Radstandskonfiguration eines Fahrzeuggespanns verändern kann, wie unter Bezugnahme auf die Figuren 1 bis 4 beschrieben wurde.

Die Figur 5 zeigt beispielhaft, wie ein Soll-Knickwinkelbereich gebildet sein kann. Anschaulich beschrieben kann für jede mögliche Radstandskonfiguration ein solcher Soll-Knickwinkelbereich vorbestimmt werden bzw. der Soll-Knickwinkelbereich von Figur 5 kann eine zusätzliche Dimension (z-Achse) aufweisen, die sich auf die möglichen Radstandskonfigurationen bezieht.

Der Soll-Knickwinkelbereich ist von einer oberen Stabilitätsgrenze und von einer unteren Stabilitätsgrenze begrenzt.

Zu jedem Lenkradwinkel bzw. Lenkwinkel beim Zugfahrzeug 10 stellt sich innerhalb eines variablen Zeitfensters am Koppelpunkt (z. B. Anhängerkupplung 20 oder Führungszapfen 14) ein Knickwinkel zwischen Zugfahrzeug 10 und Auflieger 12/Anhänger 18 ein.

Die Zeitverzögerung zwischen Lenken und Knickwinkeländerung ist bspw. sowohl von der Lenkraddrehgeschwindigkeit als auch von der Fahrzeuggeschwindigkeit abhängig und ist entsprechend zu berücksichtigen.

Weicht ein bestimmter Ist-Knickwinkel vom Soll-Knickwinkel um einen bestimmten Betrag ab, ist also außerhalb des Soll-Knickwinkelbereichs (z. B. oberhalb der oberen Stabilitätsgrenze oder unterhalb der unteren Stabilitätsgrenze), wird sich zug-um-zug eine instabile, gefährliche oder nicht mehr beherrschbare Gesamtfahrsituation einstellen. Bei einer beliebigen Kurvenfahrt kann der Auflieger 12/Anhänger 18 z. B. zum kurvenäußeren Radius driften oder z. B. durch Überbremsung zum kurveninneren Radius abdriften. Beide Situationen können gemäß der vorliegenden Offenbarung frühzeitig erkannt werden, sodass stabilisierende Maßnahmen eingeleitet und durchgeführt werden können.

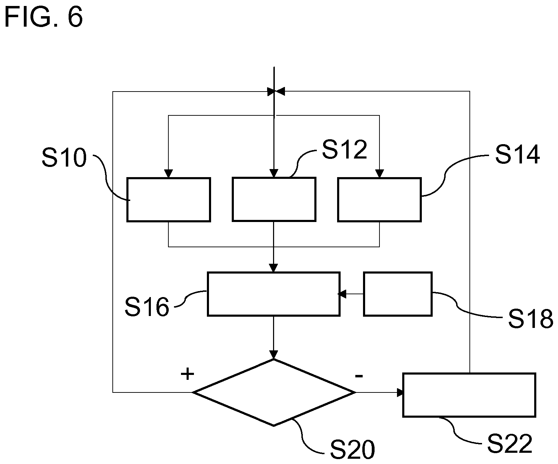

Nachfolgend ist ein beispielhaftes Verfahren zum Stabilisieren eines Fahrzeuggespanns unter Bezugnahme auf Figur 6 beschrieben. Das Verfahren nach Figur 6 ist zur besseren Verständlichkeit stark vereinfacht. In anderen Ausführungsbeispielen können bspw. auch zusätzliche oder alternative Verfahrensschritte vorgesehen sein.

In einem Verfahrensschritt S10 wird ein Ist-Lenkwinkel des Zugfahrzeugs 10 bestimmt. Z. B. wird der Ist-Lenkwinkel mittels geeigneter Sensorik an einem Lenkrad, einer Lenkwelle oder einem Lenkgetriebe des Zugfahrzeugs 10 erfasst.

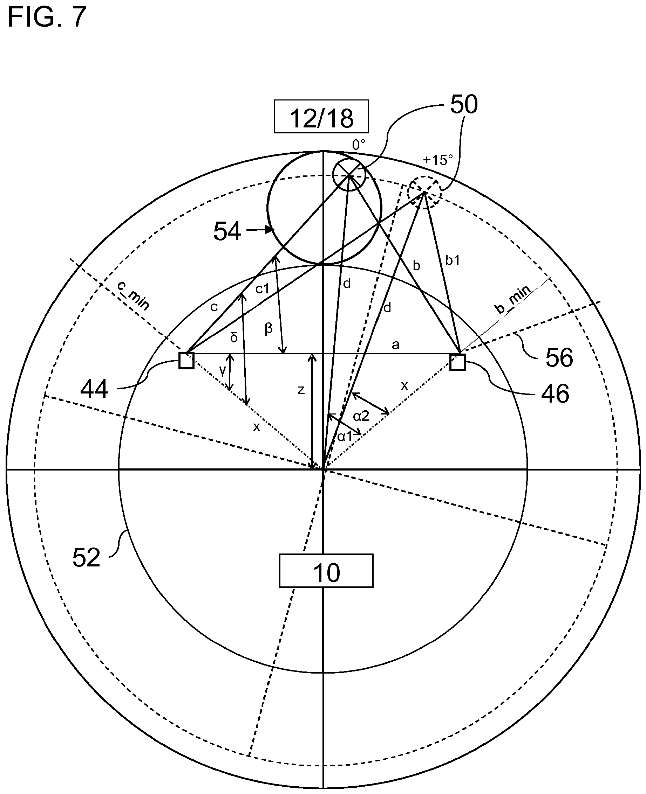

In einem Verfahrensschritt S12 wird ein Ist-Knickwinkel des Fahrzeuggespanns bestimmt, z. B. ermittelt und/oder erfasst. Der Ist-Knickwinkel liegt zwischen der Längsachse A des Zugfahrzeugs 10 und der Längsachse B des Aufliegers 12 oder Anhängers 18 (siehe Figur 4). Der Ist-Knickwinkel kann beispielsweise direkt oder indirekt erfasst oder ermittelt werden, zum Beispiel mittels geeigneter Sensorik (z. B. Ultraschalltransceivervorrichtung) und/oder entsprechenden Berechnungen (z. B. gemäß Figur 7).

In einem Verfahrensschritt S14 wird die Ist-Radstandskonfiguration bestimmt. Diese kann zum Beispiel automatisch bestimmt (z. B. erfasst) und/oder manuell eingegeben oder ausgewählt werden. Insbesondere kann die Ist-Radstandskonfiguration des Zugfahrzeugs 10 in einer Zentralsteuereinheit des Zugfahrzeugs 10 bekannt sein. Die Ist-Radstandskonfiguration des Anhängers 18 und des Aufliegers 12 hingegen können beispielsweise als Steuerdaten vorliegen oder als Parameter eingegeben, ausgewählt und/oder aus Fahr- und Lenkbewegungen des Fahrzeuggespanns ermittelt werden. Die Bestimmungen aus den Fahr- und Lenkbewegungen des Fahrzeuggespanns kann gemäß einem Überprüfungsverfahren unter sicheren Fahrbedingungen erfolgen, wobei für die sicheren Fahrbedingungen genau definiert ist, welcher Ist-Kippwinkel bei welchem Ist-Lenkwinkel welcher Ist-Radstandskonfiguration zugeordnet ist. Sichere Fahrbedingungen liegen beispielsweise bei einer in Relation zum Reibbeiwert der Reifen und dem Kurvenradius vorbestimmter, geringer Querbeschleunigung vor.

In einem Verfahrensschritt S16 kann für den im Schritt S10 bestimmten Ist-Lenkwinkel und für die im Schritt S14 bestimmte Ist-Radstandskonfiguration ein diesen zugeordneter Soll-Knickwinkel (oder Soll-Knickwinkelbereich) bestimmt werden (vgl. auch Figur 5). Der Soll-Knickwinkel ist insbesondere abhängig von der Ist-Radstandskonfiguration der veränderlichen Radstandskonfiguration des Fahrzeuggespanns vorbestimmt. Bspw. können die Soll-Knickwinkel einer vorbestimmten Tabelle, einem vorbestimmten Kennfeld und/oder einer vorbestimmten Formel entnommen werden, die zuvor insbesondere abhängig von unterschiedlichen möglichen Ist-Radstandskonfigurationen bestimmt wurden, z. B. in einem Verfahrensschritt S18.

Beispielsweise kann der Soll-Knickwinkel und/oder der Soll-Knickwinkelbereich für eine Mehrzahl von möglichen Ist- Radstandskonfiguration jeweils durch eine definierte Kurvenfahrt des Fahrzeuggespanns unter stabilen Fahrbedingungen bestimmt werden. Beispielsweise kann das Fahrzeuggespann oberhalb einer vorbestimmten Mindestgeschwindigkeit (z. B mindestens 15 km/h), unterhalb eines vorbestimmen Maximalbeschleunigungsbetrags (z. B. maximal 0,05 m/s²) und innerhalb eines vorbestimmen Lenkwinkelbereichs (z. B. 10° ± 2°, 20° ± 2°, 30° ± 2°, 40° ± 2°, 50° ± 2°, 60° ± 2° oder 70° ± 2° usw.) für jede mögliche Ist-Radstandskonfiguration und für eine Vielzahl von möglichen Ist-Lenkwinkel betrieben werden. So kann für eine Vielzahl von möglichen Ist-Lenkwinkeln und für jede mögliche Ist-Radstandskonfiguration ein Soll-Knickwinkel oder Soll-Knickwinkelbereich unter stabilen Fahrbedingungen vorbestimmt werden.

Weitere vorbestimmte Einflussgrößen können zur Bestimmung des Soll-Knickwinkels oder des Soll-Knickwinkelbereichs herangezogen werden. Der Einfluss der zusätzlichen Einflussgrößen kann beispielsweise auch in dem Schritt S18 zuvor bestimmt worden sein, sodass der Einfluss der Einflussgrößen auf den Soll-Lenkwinkel ebenfalls vorbestimmt ist. Die zusätzlichen Einflussgrößen können beispielsweise eine Fahrzeuggeschwindigkeit, klimatische Bedingungen (z. B. Seitenwind, Windgeschwindigkeit) und/oder Traktionsbedingungen (zum Beispiel Glätte) aufweisen. Z. B. kann der Soll-Knickwinkelbereich bspw. bei höheren Fahrzeuggeschwindigkeiten, bei Seitenwind und/oder bei Glätte enger sein (z. B. höherer unterer Grenzwert und/oder kleinerer oberer Grenzwert) als bei niedrigeren Fahrzeuggeschwindigkeiten, Windstille und/oder guten Traktionsbedingungen.

In einem Schritt S20 wird der Ist-Knickwinkel aus dem Schritt S12 mit dem zulässigen Knickwinkel und/oder dem zulässigen Knickwinkelbereich aus dem Schritt S16 verglichen. Liegt beispielsweise der Ist-Knickwinkel innerhalb des Soll-Knickwinkelbereichs (+), wird das Verfahren mit den Schritten S10, S12, S14 fortgesetzt. Liegt hingegen beispielsweise der Ist-Knickwinkel außerhalb des Soll-Knickwinkelbereichs (-), wird das Verfahren mit dem Schritt S22 fortgesetzt.

Im Schritt S22 kann beispielsweise ein vorbestimmter, automatischer Stabilisierungseingriff durchgeführt werden, zum Beispiel ein Lenkeingriff und/oder eine Geschwindigkeitsverringerung, um das Fahrzeuggespann zu stabilisieren. Vorzugsweise können radselektive Bremseingriffe am Zugfahrzeug 10, am Auflieger 12 und/oder am Anhänger 18, und/oder Motorleistungseingriffe durchgeführt werden. Zusätzlich oder alternativ besteht die Möglichkeit, einen Fahrzeugführer des Zugfahrzeugs 10 entsprechend zu informieren, beispielsweise damit dieser entsprechende Stabilisierungseingriffe manuell durchführen kann.

Nachfolgend ist noch eine beispielhafte Vorrichtung und ein Verfahren zur Bestimmung des Knickwinkels gemäß der vorliegenden Offenbarung unter Bezugnahme auf die Figuren 1 bis 3 und 7 beschrieben, die z. B. im Verfahrensschritt S12 den Ist-Knickwinkel bestimmen können.

Die Figur 1 zeigt, dass das Zugfahrzeug 10 eine Ultraschalltransceivervorrichtung 44, 46 aufweisen kann. Es kann allerdings auch eine andere Abstandssensorvorrichtung, zum Beispiel mit zwei Abstandssensoren mit einem anderen Wirkprinzip verwendet werden. Alle hierin mit Bezug zu den Ultraschalltransceivern 44, 46 beschriebenen Merkmale können somit gleichermaßen einzeln oder in Kombination von einer alternativen Abstandssensorvorrichtung, z. B. mit zwei Abstandssensoren, mit jeglichem anderem Wirkprinzip verwendet werden.

Die Ultraschalltransceivervorrichtung 44, 46 kann einen ersten Ultraschalltransceiver 44 und einen zweiten Ultraschalltransceiver 46 aufweisen. Die Ultraschalltransceiver 44, 46 dienen als Abstandssensoren. Bei dem als Sattelzugmaschine ausgebildeten Zugfahrzeug 10 können die Ultraschalltransceiver 44, 46 an der Sattelplatte 16 des Zugfahrzeugs 10 angeordnet sein. Die Ultraschalltransceiver 44, 46 können zu dem (verbundenen) Auflieger 12 (siehe Figur 2 gerichtet sein). Die Ultraschalltransceiver 44, 46 können vorzugsweise beabstandet zueinander in einer Querrichtung des Fahrzeuggespanns an einer dem Auflieger 12 zugewandten Fläche der Sattelplatte 16 angeordnet sein. Insbesondere sind die Ultraschalltransceiver 44, 46 jeweils an der senkrechten Fläche der hinteren Enden (Schwalbenschwanz) der Sattelplatte 16 angebracht. Die im Zugfahrzeug 10 fest eingebaute Sattelplatte 16 wird dann fahrzeugzugehörig mit Winkel und Abstand der Ultraschalltransceiver 44, 46 zur Führungszapfenaufnahme der Sattelplatte 16 für den Führungszapfen 14 parametriert. Die geometrische Berechnung erfolgt beispielsweise mittels schiefwinkligem Dreieck (vgl. Figur 7: Abstände x, a; Winkel $\gamma$).

Alternativ könnten die Ultraschalltransceiver 44, 46 bspw. auch in einer Querrichtung des Fahrzeuggespanns beabstandet zueinander an einem Heckquerträger 48 des Zugfahrzeugs 10, das den Anhänger 18 (siehe Figur 3) zieht, angeordnet und dem Anhänger 18 zugewandt sein. Hier wirken die miteinander verbundenen Anhängerkupplungen 20, 42 als geometrischer Drehpunkt.

Die Ultraschalltransceiver 44, 46 können beispielsweise verschmutzungsresistent sein und einen Öffnungswinkel von mindestens 120° aufweisen. Die Ultraschalltransceiver 44, 46 können einen Wegbereich von etwa 80 mm bis 500 mm Empfangsbereich aufweisen. Eine Empfindlichkeit der Ultraschalltransceiver 44, 46 kann derart gewählt sein, um beispielsweise einen Reflektorpin mit einem 10 mm Durchmesser sicher zu sensieren. Der Öffnungswinkel muss eine sichere Positionserkennung bei Geradeausfahrt gewährleisten. Eine Sensierung von Knickwinkeln größer als zum Beispiel 70° ist nicht unbedingt erforderlich, da eine Differenzierung bei Knickwinkel >70° häufig keinen verwertbaren Nutzen mehr mit sich bringt. Vorzugsweise kann der Öffnungswinkel der Ultraschalltransceiver 44, 46 so eingestellt oder ausgewählt sein, dass 70° Knickwinkel gerade noch erfasst werden und beispielsweise der andere Grenzschenkel des jeweiligen Ultraschalltransceivers bis zur Linie des minimalen Abstands des anderen Ultraschalltransceivers reicht (vgl. Figur 7 mit einem beispielhaften Grenzschenkel als Sensoröffnungsgrenze 56 des Ultraschalltransceivers 46). Eine Abtastrate der Ultraschalltransceiver 44, 46 kann bei mindestens 600 Hz liegen, um beispielsweise Instabilitäten innerhalb von 1/10 Sekunde erkennen zu können.

Die Figur 2 zeigt, dass der Auflieger 12 einen Reflektor 50 aufweisen kann. Der Reflektor 50 ist außerhalb eines Drehkreises einer Sattelplatte 16 des Zugfahrzeugs 10 an einer Unterseite des Aufliegers 12 hinter dem Führungszapfen 14 angeordnet (vgl. auch Figur 7 mit Sattelplattenkreis 52 und Reflektor 50).

Die Figur 3 zeigt, dass der Anhänger 18 einen Reflektor 50 aufweisen kann. Der Reflektor 50 ist an einem vorderen Bereich, z. B. vorderes Dreieck, der Deichsel 22 angebracht.

Der Reflektor 50 kann insbesondere ein Reflektorpin, vorzugsweise ein Stahlpin, sein. Hier muss keine exakte Positionsausrichtung des Reflektors 50 zu den Ultraschalltransceivern 44, 46 erfolgen. Dies trägt dem Auswechseln von Zugfahrzeugen 10 und Aufliegern 12 oder Anhängern 18 Rechnung. Es ist lediglich notwendig, den Reflektor 50 innerhalb eines vorbestimmen variablen Anbringungsbereichs 54 (siehe Figur 7) zu positionieren. Innerhalb des Anbringungsbereichs 54 kann der Reflektor 50 jedoch frei positioniert werden. Der vorbestimmte Anbringungsbereich 54 kann bspw. ein mittiger Radius- oder Kreisbereichs sein (siehe Figur 7), z. B. bei $\pm 10°$ zur Längsachse des Zugfahrzeugs 10.

Das Verfahren zur Knickwinkelbestimmung kann in einer Anlernphase dann zunächst eine Positionserkennung des Reflektors 50 durchführen. Voraussetzung hierfür kann eine Erfassung des Ist-Lenkradwinkels zum Beispiel mittels Lenkwinkelsensor, eine Links-Rechts-Erkennung des Lenkeinschlag bzw. der Lenkradstellung sowie eine Geradeausfahrterkennung sein.

Die exakte Positionsbestimmung des Reflektors 50 kann beispielsweise direkt nach dem Ankuppeln des Aufliegers 12/Anhängers 18 an das Zugfahrzeug 10 erfolgen. Nur nach exakter Positionsbestimmung des Reflektors 50 kann im Fahrbetrieb eine genaue Sensierung des Ist-Knickwinkels zwischen Zugfahrzeug 10 und Auflieger 12 oder Anhänger 18 bei der hier beispielhaft verwendeten Konfiguration mit freier Positionierung des Reflektors 50 in einem vorbestimmten Anbringungsbereich erfolgen.

Die Positionsbestimmung des Reflektors 50 im vorbestimmten Anbringungsbereich kann bspw. bei exakter Geradeausfahrt erfolgen, bei der (im Wesentlichen) keine Winkelabweichung der Längsachsen von Zugfahrzeug 10 und Auflieger 12 oder Anhänger 18 auftritt. Die Geradeausfahrt wird z. B. durch eine mittige Lenkradwinkelabweichung von max. $\pm 2°$ innerhalb von 5 Sekunden bei einer maximalen Längsdynamik $< 0{,}05$ m/s$^2$ und/oder einer Mindestgeschwindigkeit von 15 km/h definiert. Ist das Kriterium erfüllt, werden für die Geradeausfahrt die Abstände b und c durch Sensierung mittels der Ultraschalltransceiver 44, 46 erfasst (siehe Figur 7). Mit dem konstruktiv bekannten Abstand a zwischen den beiden Ultraschalltransceivern 44, 46 liegt somit ein bekanntes, schiefwinkeliges Dreieck vor. Gleichzeitig können die Winkel $\alpha 1$, $\beta$, $\gamma$, $\delta$ und der Reflektorradius d zur Führungszapfen-Drehachse oder Anhängerkupplung-Drehachse und der Abstand x berechnet werden. Hierfür können bspw. die nachfolgenden Formeln verwendet werden:

$$(1) \qquad x = \sqrt{\left(\frac{a}{2}\right)^2 + z^2}$$

$$(2) \qquad \beta = arccos\left(\frac{a^2+b^2-c^2}{2ac}\right)$$

$$(3) \qquad \gamma = arctan\left(\frac{z}{\frac{a}{2}}\right)$$

$$(4) \qquad \delta = \beta + \gamma$$

$$(5) \qquad d = \sqrt{c^2 + x^2 - (2xc * cos\delta)}$$

$$(6) \qquad \alpha 1 = arccos\left(\frac{x^2+d^2-b^2}{2xd}\right)$$

Bspw. kann dann mit Geometrieformeln über schiefwinkelige Dreiecke wie Cosinus-Satz über die aktuell gemessenen Abstände b oder c der Ist-Knickwinkel zwischen den Längsachsen von Zugfahrzeug 10 und Auflieger 12/Anhänger 18 auch im Fahrbetrieb errechnet werden.

Weil der Reflektorradius d nach der initialen Berechnung bekannt ist und sich nicht mehr verändert, kann für die Winkelberechnung nur noch ein Ultraschalltransceiver 44 oder 46, also nur noch die Messung eines Abstands c1 oder b1, erforderlich sein. Bei Fahrt bzw. Lenkung in Rechtsrichtung kann bspw. der Ultraschalltransceiver auf der rechten Seite, also Ultraschalltransceiver 44, und bei Fahrt bzw. Lenkung in Linksrichtung kann bspw. der Ultraschalltransceiver auf der linken Seite, also Ultraschalltransceiver 46, verwendet werden. Der Knickwinkel (z. B. rund 15° im Beispiel von Figur 7) ergibt sich dann als Differenz aus dem Winkel $\alpha1$, der beim Anlernen bzw. Kalibrieren der Reflektorposition des Reflektors 50 bestimmt wurde, und dem Winkel $\alpha2$, der als Ist-Wert während der Fahrt bspw. wie folgt berechnet wurde.

$$(7) \qquad \alpha2 = arccos\left(\frac{x^2+d^2-b1^2}{2xd}\right)$$

Der jeweilige Abstand b1 oder c1 durchläuft allerdings ein Minimum (z. B. b_min in Figur 7), womit sich im Bereich von bspw. etwa 50° bis 70°zwei zur Minimum-Position mögliche Positionen ergeben. Dies kann aber bspw. an der Bahnkurve (zeitliche Abfolge) logisch ("Wurde das Minimum bereits durchlaufen?") erkannt werden. Es ist auch möglich, dass die Position, welche näher zur Geradeausfahrt liegt, noch vom jeweils anderen (gegenüberliegenden) Ultraschalltransceiver 44 oder 46 erfasst wird, womit die Position auf jeden Fall eindeutig sensiert werden kann.

Ferner kann eine Abkoppelerkennung vorgesehen sein, z. B. um zu erkennen, ob die Reflektorposition des Reflektors 50 bei einem neu angekoppelten Auflieger 12/Anhänger 18 neu angelernt bzw. kalibriert werden muss.

Bei Zündung EIN des Zugfahrzeugs 10 kann eine Abkoppelung vorzugsweise über eine Erfassung einer bspw. wesentlichen Vergrößerung von b und c (siehe Figur 7), d. h. Abstand zwischen Zugfahrzeug 10 und Auflieger 12/Anhänger 18, erfolgen.

Bei Zündung AUS des Zugfahrzeugs 10 können bspw. der letzte bekannte Lenkradwinkel des Zugfahrzeugs 10 und die letzten bekannten Abstände b und c abgespeichert werden. Erfolgt dann bei der nächsten Fahrt eine Zündung EIN des Zugfahrzeugs 10, können bspw. die IstWerte des Lenkradwinkels des Zugfahrzeugs 10 und der Abstände b und c mit den abgespeicherten Werten verglichen werden. Sind alle drei Werte jeweils identisch, lag keine Abkoppelung vor. Ein Neu-Anlernen der Reflektorposition des Reflektors 50 ist dann nicht erforderlich. Liegt eine Differenz eines Wertepaars vor, kann auf Abkoppelung erkannt werden. Dies kann bspw. auch durch Drehen am Lenkrad im Stillstand bei Zündung aus "provoziert" werden. Wurde eine Abkoppelung erkannt, ist ein erneutes Anlernen der Reflektorposition des Reflektors 50 innerhalb des variablen Anbringungsbereichs 54 erforderlich.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins des Bestimmens der Position des Reflektors und/oder des Bestimmens des Ist-Knickwinkels des unabhängigen Anspruchs 1 offenbart.

**Bezugszeichenliste**

| | |
|---|---|
| 10 | Zugfahrzeug |
| 12 | (Sattel-) Auflieger |
| 14 | Führungszapfen |
| 16 | Sattelplatte |
| 18 | Anhänger |
| 20 | Anhängerkupplung |
| 22 | Deichsel |
| 24 | Vorderachse |
| 26 | Erste Hinterachse |
| 28 | Zweite Hinterachse (Liftachse) |
| 30 | Erste Achse |
| 32 | Zweite Achse |
| 34 | Dritte Achse (Liftachse) |
| 36 | Erste Achse |
| 38 | Zweite Achse |
| 40 | Dritte Achse (Liftachse) |

| | |
|---|---|
| 42 | Anhängerkupplung |
| 44 | Erster Ultraschalltransceiver |
| 46 | Zweiter Ultraschalltransceiver |
| 48 | Heckquerträger |
| 50 | Reflektor |
| 52 | Sattelplattenkreis |
| 54 | Anbringungsbereich |
| 56 | Sensoröffnungsgrenze |

| | | |
|---|---|---|
| A, B | | Längsachsen |
| rs1-rs3 | | Abstände |
| K1 | | Kleiner Wendekreis |
| K2 | | Großer Wendekreis |
| $\alpha 1$-$\delta$ | | Winkel |
| a-z | | Abstände |
| S10-S22 | | Verfahrensschritte |

**Patentansprüche**

1.  Verfahren zur Knickwinkelbestimmung bei einem Fahrzeuggespann (10, 12, 18) aufweisend ein Zugfahrzeug (10) und einen Auflieger (12), aufweisend:

    Bestimmen einer Position eines, vorzugsweise aufliegerseitigen, Reflektors (50) relativ zu einer, vorzugsweise zugfahrzeugseitigen, Abstandssensorvorrichtung (44, 46) bei einer Geradeausfahrt des Fahrzeuggespanns (10, 12, 18); und
    Bestimmen eines Ist-Knickwinkels des Fahrzeuggespanns (10, 12, 18) mittels der Abstandssensorvorrichtung (44, 46) und des Reflektors (50) während eines Betriebs des Fahrzeuggespanns (10, 12, 18) nach der Geradeausfahrt basierend auf der ermittelten Position des Reflektors (50),
    wobei die Abstandssensorvorrichtung (44, 46) an einer Sattelplatte (16) des Zugfahrzeugs (10) angeordnet ist, und/oder der Reflektor (50) außerhalb eines Drehkreises einer Sattelplatte (16) des Zugfahrzeugs (10) unterhalb des Aufliegers (12) angeordnet ist.

2.  Verfahren nach Anspruch 1, wobei:
    die Bestimmung der Position des Reflektors (50) innerhalb eines vorbestimmten Anbringungsbereichs (54) erfolgt, sodass der Reflektor (50) innerhalb dieses vorbestimmen Anbringungsbereichs (54) frei positionierbar ist.

3.  Verfahren nach Anspruch 1 oder Anspruch 2, wobei:
    die Bestimmung der Position des Reflektors (50) bei einer Neuankopplung oder einer Abkoppelung des Aufliegers (12) an das Zugfahrzeug (10) wiederholt wird.

4.  Verfahren nach Anspruch 3, wobei die Neuankopplung oder die Abkoppelung erkannt wird durch:

    Manuelles Eingeben in eine Benutzerschnittstelle des Fahrzeuggespanns (10, 12, 18), vorzugsweise des Zugfahrzeugs (10); und/oder
    Erkennen einer Veränderung eines Abstands (b, c) zwischen dem Zugfahrzeug (10) und dem Auflieger (12), vorzugsweise bei eingeschalteter Zündung des Zugfahrzeugs (10); und/oder
    Vergleichen eines Lenkwinkels des Zugfahrzeugs (10) vor einem Ausschalten einer Zündung des Zugfahrzeugs (10) mit einem Lenkwinkel des Zugfahrzeugs (10) nach einem Einschalten der Zündung und/oder Vergleichen eines erfassten Abstands (b, c) zwischen dem Zugfahrzeug (10) und dem Auflieger (12) vor dem Ausschalten der Zündung und einem erfassten Abstand (b, c) zwischen dem Zugfahrzeug (10) und dem Auflieger (12) nach dem Einschalten der Zündung.

5.  Verfahren nach einem der vorherigen Ansprüche, wobei die Geradeausfahrt des Fahrzeuggespanns durchgeführt wird:

    für eine vorbestimmte Zeitdauer; und/oder
    oberhalb einer vorbestimmten Mindestgeschwindigkeit; und/oder

unterhalb eines vorbestimmen Maximalbeschleunigungsbetrags; und/oder
unterhalb eines vorbestimmen Maximallenkwinkelbetrags.

6. Verfahren nach einem der vorherigen Ansprüche, wobei:
der Reflektor (50) als ein Reflektorpin, vorzugsweise als ein Stahlpin, ausgebildet ist.

7. Verfahren nach einem der vorherigen Ansprüche, wobei:
die Abstandssensorvorrichtung (44, 46) einen ersten Abstandssensor (44), vorzugsweise Ultraschalltransceiver, und einen zweiten Abstandssensor (46), vorzugsweise Ultraschalltransceiver, aufweist, die beabstandet zueinander in einer Querrichtung des Fahrzeuggespanns (10, 12, 18) angeordnet sind.

8. Verfahren nach einem der vorherigen Ansprüche, wobei:
die Abstandssensorvorrichtung (44, 46) an einer dem Auflieger (12) zugewandten Fläche der Sattelplatte (16) angeordnet ist.

9. Verfahren nach einem der vorherigen Ansprüche, ferner aufweisend:

Bestimmen einer Ist-Radstandskonfiguration einer veränderlichen Radstandskonfiguration des Fahrzeuggespanns (10, 12, 18), vorzugsweise des Zugfahrzeugs (10) und/oder des Aufliegers (12);
Bestimmen eines Soll-Knickwinkels und/oder eines Soll-Knickwinkelbereichs basierend auf der Ist-Radstandskonfiguration; und
Vergleichen des Ist-Knickwinkels mit dem Soll-Knickwinkel und/oder dem Soll-Knickwinkelbereich.

10. Verfahren nach Anspruch 9, wobei:
der Soll-Knickwinkel und/oder der Soll-Knickwinkelbereich zusätzlich auf einem Ist-Lenkwinkel des Zugfahrzeugs (10) basiert, und vorzugsweise zusätzlich auf einer Ist-Geschwindigkeit des Fahrzeuggespanns (10, 12, 18), klimatischen Ist-Bedingungen und/oder Ist-Traktionsbedingungen.

11. Verfahren nach Anspruch 9 oder Anspruch 10, wobei.

die veränderliche Radstandskonfiguration durch eine Liftachse (26, 34, 40) des Fahrzeuggespanns, vorzugsweise des Zugfahrzeugs (10) und/oder des Aufliegers (12), veränderlich ist; und/oder
die veränderliche Radstandskonfiguration durch eine steuerbare Lenkachse des Fahrzeuggespanns, vorzugsweise des Zugfahrzeugs (10) und/oder des Aufliegers (12), veränderlich ist.

12. Verfahren nach einem der Ansprüche 9 bis 11, wobei die Ist-Radstandskonfiguration aufweist:

einen wirksamen Abstand (rs2) zwischen einem Führungszapfen (14) des Aufliegers (12) und einer oder mehrerer Achsen (30, 32, 34) des Aufliegers (12) im Eingriff mit einem Untergrund; und/oder
einen wirksamen Abstand (rs1) zwischen einer oder mehrerer Vorderachsen (24) des Zugfahrzeugs (10) im Eingriff mit einem Untergrund und einer oder mehreren Hinterachsen (26, 28) des Zugfahrzeugs (10) im Eingriff mit dem Untergrund; und/oder
eine Information bezüglich einer Stellung einer anhebbaren und absenkbaren Liftachse (26, 34, 40) des Fahrzeuggespanns (10, 12, 18), vorzugsweise des Zugfahrzeugs (10) und/oder des Aufliegers (12); und/oder
eine Information bezüglich einer Stellung einer steuerbaren Lenkachse des Fahrzeuggespanns (10, 12, 18), vorzugsweise des Zugfahrzeugs (10) und/oder des Aufliegers (12).

13. Verfahren nach Anspruch 12, wobei:
bei gleichem Ist-Lenkwinkel des Zugfahrzeugs (10) der Soll-Knickwinkel und/oder der Soll-Knickwinkelbereich umso höher ist, je größer der wirksame Abstand (rs1, rs2, rs3) ist.

14. Verfahren nach einem der Ansprüche 9 bis 13, wobei das Bestimmen der Ist-Radstandskonfiguration aufweist:

Manuelles Eingeben und/oder Auswählen der Ist-Radstandskonfiguration der veränderlichen Radstandskonfiguration des Fahrzeuggespanns (10, 12, 18), vorzugsweise des Zugfahrzeugs (10) und/oder des Aufliegers (12); und/oder
Automatisches Bestimmen der Ist-Radstandskonfiguration der veränderlichen Radstandskonfiguration des Fahrzeuggespanns (10, 12, 18), vorzugsweise des Zugfahrzeugs (10) und/oder des Aufliegers (12).

**15.** Verfahren nach einem Ansprüche 9 bis 14, wobei:
der Soll-Knickwinkel und/oder der Soll-Knickwinkelbereich für eine oder eine Mehrzahl von Ist-Radstandskonfigurationen durch eine definierte Kurvenfahrt des Fahrzeuggespanns (10, 12, 18) unter stabilen Fahrbedingungen vorbestimmt wird, vorzugsweise:

oberhalb einer vorbestimmten Mindestgeschwindigkeit; und/oder
unterhalb eines vorbestimmen Maximalbeschleunigungsbetrags; und/oder
innerhalb eines vorbestimmen Lenkwinkelbereichs.

**Claims**

**1.** A method for determining the articulation angle in a vehicle combination (10, 12, 18) comprising a towing vehicle (10) and a semi-trailer (12), comprising:

determining a position of a reflector (50), preferably on the semi-trailer side, relative to a distance sensor device (44, 46), preferably on the towing vehicle side, during a straight-ahead travel of the vehicle combination (10, 12, 18); and
determining an actual articulation angle of the vehicle combination (10, 12, 18) by means of the distance sensor device (44, 46) and the reflector (50) during operation of the vehicle combination (10, 12, 18) after the straight-ahead travel based on the determined position of the reflector (50),
wherein the distance sensor device (44, 46) is arranged on a fifth wheel plate (16) of the towing vehicle (10), and/or the reflector (50) is arranged outside a turning circle of a fifth wheel plate (16) of the towing vehicle (10) below the semi-trailer (12).

**2.** The method according to claim 1, wherein:
the determining the position of the reflector (50) is performed within a predetermined mounting area (54), such that the reflector (50) is freely positionable within the predetermined mounting area (54).

**3.** The method according to claim 1 or claim 2, wherein:
the determining of the position of the reflector (50) is repeated when the semi-trailer (12) is re-coupled or uncoupled to the towing vehicle (10).

**4.** The method according to claim 3, wherein the re-coupling or uncoupling is detected by:

manual inputting into a user interface of the vehicle combination (10, 12, 18), preferably the towing vehicle (10); and/or
detecting a change in a distance (b, c) between the towing vehicle (10) and the semi-trailer (12), preferably with the ignition of the towing vehicle (10) switched on; and/or
comparing a steering angle of the towing vehicle (10) before switching off an ignition of the towing vehicle (10) with a steering angle of the towing vehicle (10) after switching on the ignition and/or comparing a detected distance (b, c) between the towing vehicle (10) and the semi-trailer (12) before switching off the ignition and a detected distance (b, c) between the towing vehicle (10) and the semi-trailer (12) after switching on the ignition.

**5.** The method according to any of the preceding claims, wherein the straight-ahead travel of the vehicle combination is performed:

for a predetermined period of time; and/or
above a predetermined minimum speed; and/or
below a predetermined maximum acceleration amount; and/or
below a predetermined maximum steering angle amount.

**6.** The method according to any one of the preceding claims, wherein:
the reflector (50) is configured as a reflector pin, preferably a steel pin.

**7.** The method according to any one of the previous claims, wherein:
the distance sensor device (44, 46) comprises a first distance sensor (44), preferably ultrasonic transceiver, and a second distance sensor (46), preferably ultrasonic transceiver, arranged spaced apart in a transverse direction of the vehicle combination (10, 12, 18).

8.   The method according to any one of the preceding claims, wherein:
the distance sensor device (44, 46) is arranged on a face of the fifth-wheel plate (16) facing the semi-trailer (12).

9.   The method according to any one of the preceding claims, further comprising:

Determining an actual wheelbase configuration of a variable wheelbase configuration of the vehicle combination (10, 12, 18), preferably the towing vehicle (10) and/or the semi-trailer (12);
determining a target articulation angle and/or a target articulation angle range based on the actual wheelbase configuration; and
comparing the actual articulation angle with the target articulation angle and/or the target articulation angle range.

10.   The method according to claim 9, wherein:
the target articulation angle and/or the target articulation angle range is additionally based on an actual steering angle of the towing vehicle (10), and preferably additionally based on an actual speed of the vehicle combination (10, 12, 18), actual climatic conditions and/or actual traction conditions.

11.   The method according to claim 9 or claim 10, wherein.

the variable wheelbase configuration is variable by a lift axle (26, 34, 40) of the vehicle combination, preferably the towing vehicle (10) and/or the semi-trailer (12); and/or
the variable wheelbase configuration is variable by a controllable steering axle of the vehicle combination, preferably the towing vehicle (10) and/or the semi-trailer (12).

12.   The method according to any one of claims 9 to 11, wherein the actual wheelbase configuration comprises:

an effective distance (rs2) between a guide pin (14) of the semi-trailer (12) and one or more axles (30, 32, 34) of the semi-trailer (12) in engagement with a ground; and/or
an effective distance (rs1) between one or more front axles (24) of the towing vehicle (10) in engagement with a ground and one or more rear axles (26, 28) of the towing vehicle (10) in engagement with the ground; and/or
information relating to a position of a liftable and lowerable lift axle (26, 34, 40) of the vehicle combination (10, 12, 18), preferably of the towing vehicle (10) and/or of the semi-trailer (12); and/or
information relating to a position of a controllable steering axle of the vehicle combination (10, 12, 18), preferably of the towing vehicle (10) and/or of the semi-trailer (12).

13.   The method according to claim 12, wherein:
for the same actual steering angle of the towing vehicle (10), the greater the effective distance (rs1, rs2, rs3), the greater the desired articulation angle and/or the desired articulation angle range.

14.   The method according to any one of claims 9 to 13, wherein determining the actual wheelbase configuration comprises:

Manually entering and/or selecting the actual wheelbase configuration of the variable wheelbase configuration of the vehicle combination (10, 12, 18), preferably the towing vehicle (10) and/or the semi-trailer (12); and/or
automatically determining the actual wheelbase configuration of the variable wheelbase configuration of the vehicle combination (10, 12, 18), preferably the towing vehicle (10) and/or the semi-trailer (12).

15.   The method according to any one of claims 9 to 14, wherein:
the target articulation angle and/or the target articulation angle range for one or a plurality of actual wheelbase configurations is predetermined by a defined cornering of the vehicle combination (10, 12, 18) under stable driving conditions, preferably:

above a predetermined minimum speed; and/or
below a predetermined maximum acceleration amount; and/or
within a predetermined steering angle range.

**Revendications**

1. Procédé de détermination d'angle d'articulation pour un attelage routier (10, 12, 18) possédant un véhicule tracteur (10) et une semi-remorque (12), comprenant :

   détermination d'une position d'un réflecteur (50), de préférence côté semi-remorque, par rapport à un dispositif de détection d'écart (44, 46), de préférence côté véhicule tracteur, lors d'un déplacement en ligne droite de l'attelage routier (10, 12, 18) ; et
   détermination d'un angle d'articulation réel de l'attelage routier (10, 12, 18) au moyen du dispositif de détection d'écart (44, 46) et du réflecteur (50) pendant un fonctionnement de l'attelage routier (10, 12, 18) après le déplacement en ligne droite en se basant sur la position déterminée du réflecteur (50),
   le dispositif de détection d'écart (44, 46) étant disposé sur une plaque de sellette (16) du véhicule tracteur (10) et/ou le réflecteur (50) étant disposé en dehors d'un cercle de rotation d'une plaque de sellette (16) du véhicule tracteur (10) en dessous de la semi-remorque (12) .

2. Procédé selon la revendication 1, la détermination de la position d'un réflecteur (50) s'effectuant à l'intérieur d'une zone de montage (54) prédéterminée, de sorte que le réflecteur (50) puisse être positionné librement à l'intérieur de cette zone de montage (54) prédéterminée.

3. Procédé selon la revendication 1 ou la revendication 2, la détermination de la position d'un réflecteur (50) étant répétée lors d'un nouvel accouplement ou d'un désaccouplement de la semi-remorque (12) au/du véhicule tracteur (10).

4. Procédé selon la revendication 3, le nouvel accouplement ou le désaccouplement étant reconnu par :

   saisie manuelle dans une interface utilisateur de l'attelage routier (10, 12, 18), de préférence du véhicule tracteur (10) ; et/ou
   reconnaissance d'une modification d'un écart (b, c) entre le véhicule tracteur (10) et la semi-remorque (12), de préférence lorsque l'allumage du véhicule tracteur (10) est mis en circuit ; et/ou
   comparaison d'un angle de braquage du véhicule tracteur (10) avant une mise hors circuit d'un allumage du véhicule tracteur (10) avec un angle de braquage du véhicule tracteur (10) après une mise en circuit de l'allumage et/ou comparaison d'un écart (b, c) détecté entre le véhicule tracteur (10) et la semi-remorque (12) avant une mise hors circuit de l'allumage avec un écart (b, c) détecté entre le véhicule tracteur (10) et la semi-remorque (12) après une mise en circuit de l'allumage.

5. Procédé selon l'une des revendications précédentes, le déplacement en ligne droite de l'attelage routier étant effectué :

   pendant une durée prédéterminée ; et/ou
   au-dessus d'une vitesse minimale prédéterminée ; et/ou au-dessous d'une valeur de vitesse maximale prédéterminée ; et/ou
   au-dessous d'une valeur d'angle de braquage maximale prédéterminée.

6. Procédé selon l'une des revendications précédentes, le réflecteur (50) étant réalisé sous la forme d'une broche réflectrice, de préférence sous la forme d'une broche en acier.

7. Procédé selon l'une des revendications précédentes, le dispositif de détection d'écart (44, 46) possédant un premier capteur d'écart (44), de préférence un émetteur-récepteur d'ultrasons, et un deuxième capteur d'écart (46), de préférence un émetteur-récepteur d'ultrasons, lesquels sont disposés espacés l'un de l'autre dans une direction transversale de l'attelage routier (10, 12, 18).

8. Procédé selon l'une des revendications précédentes, le dispositif de détection d'écart (44, 46) étant disposé au niveau d'une surface de la plaque de sellette (16) faisant face à la semi-remorque (12).

9. Procédé selon l'une des revendications précédentes, comprenant en outre :

   détermination de la configuration d'empattement réelle d'une configuration d'empattement variable de l'attelage routier (10, 12, 18), de préférence du véhicule tracteur (10) et/ou de la semi-remorque (12) ;

détermination d'un angle d'articulation de consigne et/ou d'une plage d'angle d'articulation de consigne en se basant sur la configuration d'empattement réelle ; et

comparaison de l'angle d'articulation réel avec l'angle d'articulation de consigne et/ou la plage d'angle d'articulation de consigne.

10. Procédé selon la revendication 9, l'angle d'articulation de consigne et/ou la plage d'angle d'articulation de consigne se basant en plus sur un angle de braquage réel du véhicule tracteur (10), et de préférence en plus sur une vitesse réelle de l'attelage routier (10, 12, 18), des conditions climatiques réelles et/ou des conditions de traction réelles.

11. Procédé selon la revendication 9 ou la revendication 10,

la configuration d'empattement variable pouvant être modifiée par un essieu relevable (26, 34, 40) de l'attelage routier, de préférence du véhicule tracteur (10) et/ou de la semi-remorque (12) ; et/ou
la configuration d'empattement variable pouvant être modifiée par un essieu directeur commandable de l'attelage routier, de préférence du véhicule tracteur (10) et/ou de la semi-remorque (12).

12. Procédé selon l'une des revendications 9 à 11, la configuration d'empattement réelle comprenant :

un écart efficace (rs2) entre un tourillon de guidage (14) de la semi-remorque (12) et un ou plusieurs essieux (30, 32, 34) de la semi-remorque (12) en prise avec un sol ; et/ou
un écart efficace (rs1) entre un ou plusieurs essieux avant (24) du véhicule tracteur (10) en prise avec un sol et un ou plusieurs essieux arrière (26, 28) du véhicule tracteur (10) en prise avec le sol ; et/ou une information concernant une position d'un essieu relevable (26, 34, 40) de l'attelage routier (10, 12, 18), pouvant être levé et abaissé, de préférence du véhicule tracteur (10) et/ou de la semi-remorque (12) ; et/ou
une information concernant une position d'un essieu directeur commandable de l'attelage routier (10, 12, 18), de préférence du véhicule tracteur (10) et/ou de la semi-remorque (12).

13. Procédé selon la revendication 12, dans le cas d'un angle de braquage réel identique du véhicule tracteur (10), l'angle d'articulation de consigne et/ou la plage d'angle d'articulation de consigne est d'autant plus grand que l'écart efficace (rs1, rs2, rs3) est élevé.

14. Procédé selon l'une des revendications 9 à 13, la configuration d'empattement réelle comprenant :

saisie manuelle et/ou sélection de la configuration d'empattement réelle de la configuration d'empattement variable de l'attelage routier (10, 12, 18), de préférence du véhicule tracteur (10) et/ou de la semi-remorque (12) ; et/ou
détermination automatique de la configuration d'empattement réelle de la configuration d'empattement variable de l'attelage routier (10, 12, 18), de préférence du véhicule tracteur (10) et/ou de la semi-remorque (12).

15. Procédé selon l'une des revendications 9 à 14, l'angle d'articulation de consigne et/ou la plage d'angle d'articulation de consigne étant prédéterminé pour une ou une pluralité de configurations d'empattement réelles par un déplacement en virage défini de l'attelage routier (10, 12, 18) dans des conditions de déplacement stables, de préférence :

au-dessus d'une vitesse minimale prédéterminée ; et/ou au-dessous d'une valeur d'accélération maximale prédéterminée ; et/ou
à l'intérieur d'une plage d'angles de braquage prédéterminée.

EP 3 608 205 B1

FIG. 1

FIG. 2

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10030738 C1
- DE 10154612 A1
- EP 2436540 A1